# FASCICULE DE BREVET EUROPEEN

(11) **EP 1 835 306 B1**
(45) Date de publication et mention de la délivrance du brevet: **08.04.2015**
(21) Numéro de dépôt: 07290294.3
(22) Date de dépôt: 06.03.2007
(51) Int. Cl.: G01S 17/93, G01S 17/08, G01S 17/42

(54) **Procédé et dispositif de détection d'un obstacle au voisinage d'un véhicule en mouvement**
Verfahren und Vorrichtung zur Erkennung eines Hindernisses in der Umgebung eines sich in Bewegung befindlichen Fahrzeugs
Method and device for detecting an obstacle near a moving vehicle

(30) Priorité: 17.03.2006 FR 0602395
(43) Date de publication de la demande: 19.09.2007
(73) Titulaire: VALEO VISION, 93012 Bobigny Cedex (FR)
(72) Inventeur: Le Bars, Jean-François, 75012 Paris (FR)

(56) Documents cités:
- EP-A2- 0 957 376
- EP-A2- 1 202 075
- WO-A-99/36796
- DE-A1- 19 644 565

## Description

### DOMAINE TECHNIQUE DE L'INVENTION.

La présente invention concerne un procédé et un dispositif de détection d'un obstacle au voisinage d'un véhicule en mouvement.

Le dispositif mettant en oeuvre le procédé selon l'invention indique au conducteur de tout véhicule (automobile, camion, ou autre engin terrestre) la position d'un obstacle au sol susceptible de le gêner au cours d'une manoeuvre, notamment une marche arrière pour se garer sur un emplacement de stationnement.

### ARRIERE PLAN TECHNOLOGIQUE DE L'INVENTION.

De nombreux procédés et dispositifs remplissant cette fonction sont connus de l'état de la technique.

La demande de brevet allemand DE4233624 décrit un système très simple d'aide au parking comprenant un transmetteur et un récepteur optique intégré dans chacun des feux arrière d'un véhicule.

Les faisceaux produits par les transmetteurs sont inclinés sur la verticale en direction du sol. Le rayonnement réfléchi par l'obstacle, quand celui-ci entre dans un lobe d'émission, est détecté et déclenche une alarme visuelle.

Le document DE19644565 divulgue un dispositif de détection d'un objet en mouvement au moyen de deux faisceaux formés par des lentilles de Fresnel et émis en alternance. Les deux rayonnements réfléchis sont mesurés et les signaux électriques résultants sont comparés dans le temps. Toute différence entre les deux signaux indique la présence d'un objet se rapprochant. Ce dispositif est notamment conçu pour être activé par la manoeuvre du volant de direction d'un véhicule, de façon à détecter un autre véhicule s'approchant dans l'angle mort du rétroviseur.

Le document EP 1 202 075, correspondant au préambule de la revendication principale, décrit un dispositif de mesure de distance entre le dispositif de mesure et un objet, comprenant les étapes consistant à :
- émettre une lumière puisée qui est passée à travers une fente sur un objet cible devant être mesuré ;
- former l'image de la lumière réfléchie par l'objet au moyen d'une section d'imagerie;
- sur la base de l'image obtenue, mesurer la distance jusqu'à l'objet en se référant à une relation de positionnement entre une position d'émission de lumière de la lumière qui est passée à travers la fente et une position d'image ;
- et, lorsque la lumière qui est passée à travers la fente est projetée sur l'objet, faire varier une largeur d'impulsion de la lumière passée à travers la fente pendant une période de temps où la section d'imagerie balaye l'image, dans lequel l'étape d'imagerie comprend des première et seconde étapes de balayage, pendant lesquelles une première et une seconde images partielles sont balayées en utilisant différentes largeurs d'impulsion, et une étape de combinaison consistant à combiner la première et la seconde images partielles à ladite image obtenue utilisée pour l'étape de mesure de distance, dans lequel les pixels d'une brillance supérieure à une première valeur de seuil prédéterminée sont enlevés des images obtenues pour générer des images pour une phase pendant laquelle une lumière relativement forte est projetée ; les pixels d'une brillance inférieure à une seconde valeur de seuil prédéterminée sont enlevés des images obtenues pour générer des images pour une phase pendant laquelle une lumière relativement faible est projetée, et la distance est mesurée sur la base des images générées.

Les appareils décrits dans DE4233624 et DE19644565 ne font pas appel à des moyens électroniques complexes, mais ils ont l'inconvénient de ne donner qu'une simple indication sur la présence, ou non, d'un obstacle au voisinage du véhicule.

Le dispositif décrit dans le document US6363326 permet une localisation spatiale précise d'un objet en utilisant plusieurs télémètres en lumière infrarouge à faisceau d'émission étroit. Mais ce dispositif exige en revanche une électronique très complexe, puisqu'il est basé sur le principe de la mesure du temps de vol d'impulsions de quelques nanosecondes émises par des diodes laser.

### DESCRIPTION GENERALE DE L'INVENTION.

La présente invention vise donc à pallier les inconvénients dus au manque de précision ou à la complexité des procédés et dispositifs de détection d'un obstacle au voisinage d'un véhicule en mouvement connus de l'état de la technique.

Pour ce faire, le procédé selon l'invention consiste, de manière connue, à émettre à partir du dispositif de détection en direction du sol au moins un premier faisceau lumineux incident d'une première longueur d'onde, et à détecter au moins un premier faisceau lumineux réfléchi par le sol et l'obstacle, qui comprend les étapes suivantes :
- division du premier faisceau lumineux incident de façon à former au sol des premières franges lumineuses correspondant à des premières zones dont l'éclairement est alternativement supérieur à une première valeur haute prédéterminée et inférieur à une première valeur basse prédéterminée ;
- production d'un premier signal électrique représentatif de l'évolution dans le temps du flux lumineux transporté par le premier faisceau lumineux réfléchi.

Selon la présente invention, le procédé comporte en outre les étapes suivantes :
- formation de premières impulsions électriques par comparaison du premier signal avec un premier seuil prédéterminé ;
- comptage des premières impulsions ;
- détermination d'une première coordonnée de cet obstacle par rapport au véhicule en fonction du premier résultat de ce comptage,
et le dispositif de détection est situé sur le véhicule.

Des avantages supplémentaires sont tirés du procédé selon l'invention quand celui-ci comprend de plus les étapes suivantes :
- émission à partir du véhicule en direction du sol d'un second faisceau lumineux incident d'une seconde longueur d'onde différente de la première longueur d'onde utilisée;
- division du second faisceau lumineux incident de façon à former au sol des secondes franges lumineuses correspondant à des secondes zones dont l'éclairement est alternativement supérieur à une seconde valeur haute prédéterminée et inférieur à une seconde valeur basse prédéterminée ;
- détection d'un second faisceau lumineux réfléchi par le sol et l'obstacle ;
- production d'un second signal électrique représentatif de l'évolution dans le temps du flux lumineux transporté par le second faisceau lumineux réfléchi;
- formation de secondes impulsions électriques par comparaison du second signal avec un second seuil prédéterminé ;
- comptage des secondes impulsions ;
- détermination d'une seconde cordonnée de l'obstacle par rapport au véhicule en fonction du second résultat du comptage ;
- détermination de la position de l'obstacle par rapport au véhicule en fonction des première et seconde cordonnées.

De préférence les premières et secondes franges sont formées de telle sorte que les secondes zones coupent les premières zones perpendiculairement.

Alternativement, en variante, les premières et secondes zones sont similaires, et imbriquées les unes dans les autres de telle sorte que les maxima d'éclairement des unes correspondent aux minima d'éclairement des autres.

Dans certains cas, le procédé selon l'invention présente avantageusement les caractéristiques additionnelles suivantes :
- les première et/ ou seconde longueurs d'onde appartiennent au spectre visible ;
- les premier et/ ou second faisceaux lumineux incidents sont modulés en amplitude, de préférence en impulsion ;
- les premier et/ ou second signaux électriques résultent respectivement de l'intégration avec une constante de temps prédéterminée des grandeurs électriques proportionnelles aux flux lumineux instantanés transportés par les premier et second faisceau lumineux réfléchis.

Dans d'autres cas, on tire bénéfice du fait que les première et/ ou seconde longueurs d'onde appartiennent au spectre infrarouge.

De manière générale, les premières et/ ou secondes zones sont rectilignes et/ ou circulaires quel que soit le spectre de lumière utilisé.

L'invention concerne aussi un dispositif de détection d'un obstacle au voisinage d'un véhicule en mouvement, adapté à la mise en oeuvre du procédé décrit ci-dessus.

Ce dispositif comprend au moins un premier émetteur optique d'une première longueur d'onde produisant un premier ensemble de pinceaux lumineux au moyen d'au moins un premier système optique comportant une première pluralité de lentilles de Fresnel. Le dispositif comprend de plus au moins un premier détecteur optique de détection de la lumière de la première longueur d'onde réfléchie par le sol et l'obstacle, et captée par le premier système optique.

Ces éléments, connus en soi, sont agencés remarquablement tels que la trace sur le sol du premier ensemble de pinceaux lumineux est un premier réseau de franges.

De préférence, le premier réseau de franges présente des premières bandes lumineuses rectilignes orientées perpendiculairement à l'axe longitudinal du véhicule.

Dans un mode de réalisation préféré alternatif, ce premier réseau de franges présente des segments circulaires lumineux centrés à l'aplomb de l'arrière du véhicule.

De façon à mettre en oeuvre la version la plus complète du procédé selon l'invention, le dispositif comprend de plus une seconde série d'éléments :

D'une part, un second émetteur optique, d'une seconde longueur d'onde différente de la première longueur d'onde utilisée, produit un second ensemble de pinceaux lumineux au moyen d'un second système optique comportant une seconde pluralité de lentilles de Fresnel. La trace au sol du second ensemble de pinceaux lumineux est un second réseau de franges grâce à l'agencement particulier de ces éléments.

D'autre part, un second détecteur optique assure la détection de la lumière de la seconde longueur d'onde réfléchie par le sol et l'obstacle, et captée par le second système optique.

Afin de satisfaire à des contraintes techniques diverses, il existe plusieurs configurations distinctes des réseaux de franges. Notamment celles où:
- les premier et second réseaux de franges présentent respectivement des premières et secondes bandes lumineuses rectilignes orientées perpendiculairement à l'axe longitudinal du véhicule, les premier et second réseaux étant imbriqués ;
- le premier réseau de franges présente des premières bandes lumineuses rectilignes orientées perpendiculairement à l'axe longitudinal du véhicule, et le second réseau de franges présente des secondes bandes lumineuses rectilignes orientées parallèlement à l'axe du véhicule ;
- les premier et second réseaux de franges présentent des premières et secondes bandes lumineuses rectilignes faisant un angle de 45° par rapport à l'axe longitudinal du véhicule, les premières et secondes bandes étant perpendiculaires entre elles ;
- le premier réseau de franges présente des segments circulaires lumineux centrés en un point à l'aplomb de l'arrière du véhicule, et le second réseau de franges présente des secteurs lumineux s'étendant radialement à partir de ce point.

Ces quelques spécifications essentielles auront rendu évidents pour l'homme de métier les avantages apportés par le procédé et le dispositif de détection d'un obstacle au voisinage d'un véhicule en mouvement, selon l'invention, par rapport à l'état de la technique antérieur.

Les spécifications détaillées de l'invention sont données dans la description qui suit en liaison avec les dessins ci-annexés. II est à noter que ces dessins n'ont d'autre but que d'illustrer le texte de la description et ne constituent en aucune sorte une limitation de la portée de l'invention.

### BREVE DESCRIPTION DES DESSINS.

Les Figures 1a, 1b et 1c illustrent les différentes étapes du procédé de base de détection d'un obstacle au voisinage d'un véhicule en mouvement selon l'invention mettant en oeuvre une seule longueur d'onde.

Les Figures 2a, 2b et 2c illustrent les différentes étapes du procédé de détection d'un obstacle au voisinage d'un véhicule en mouvement selon l'invention mettant en oeuvre deux longueurs d'onde différentes.

La Figure 3 montre l'installation à l'arrière d'une automobile d'un dispositif de détection d'un obstacle au voisinage d'un véhicule en mouvement selon l'invention, dans le cas de la mise en oeuvre de deux longueurs d'onde.

Les Figures 4a, 4b et 4c donnent des exemples de configurations des réseaux de franges du dispositif selon l'invention.

### DESCRIPTION DES MODES DE REALISATION PREFERES DE L'INVENTION.

Dans sa version la plus simple, le procédé selon l'invention ne fait appel qu'à une seule longueur d'onde.

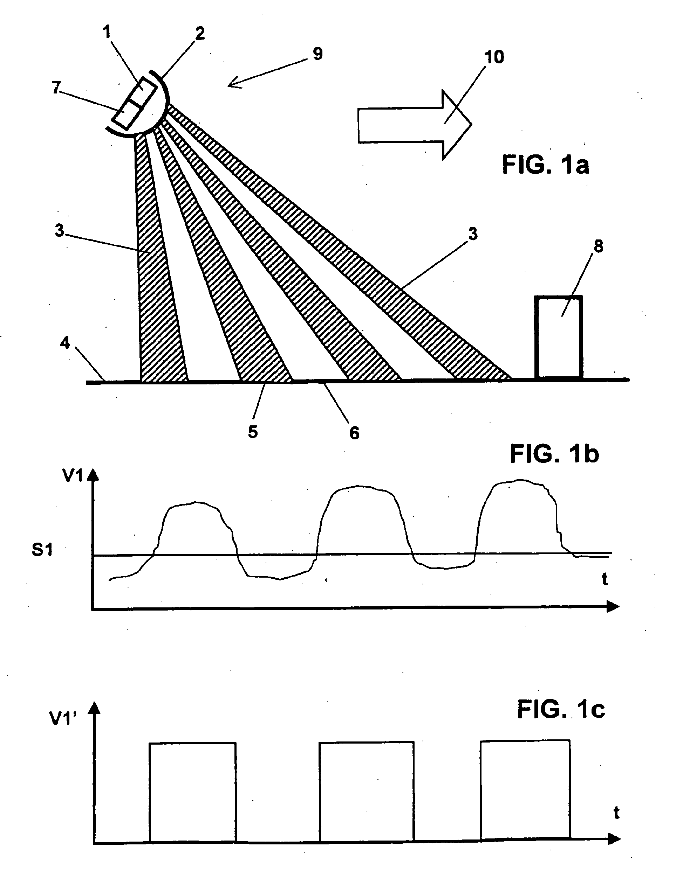

Comme le montre la Figure 1a, le rayonnement émis par une source lumineuse 1, telle que par exemple une LED ou une diode infrarouge, placée dans le plan objet d'un ensemble de lentilles de Fresnel 2 est divisé de manière à former plusieurs pinceaux lumineux 3 dont la trace sur le sol 4 est constituée alternativement de zones brillantes 5, c'est-à-dire dont l'éclairement est supérieur à un certaine valeur, et de zones sombres 6 dont l'éclairement est plus faible.

Le rayonnement réfléchi par le sol est détecté par un récepteur 7 placé également dans le plan objet des lentilles de Fresnel 2.

En l'absence d'obstacle 8 sur le sol 4, quand l'ensemble du système 9 effectue un déplacement 10, le flux réfléchi reste sensiblement constant.

Dans ces circonstances, un signal électrique V1 représentant l'évolution dans le temps du flux lumineux réfléchi reste inférieur à un seuil donné S1.

Au contraire, quand un obstacle 8 se trouve sur le sol 4, il y a un accroissement du flux réfléchi chaque fois que l'obstacle entre dans une zone éclairée 5 au cours du déplacement 10, et une diminution quand il en sort. Cela se traduit par des variations du signal électrique V1 telles que le montre la Figure 1 b.

La comparaison de ce signal électrique V1 à la valeur de seuil S1 en l'absence d'obstacle 8 produit des impulsions électriques V1' représentatives de l'intrusion de l'obstacle dans le réseau de franges 5,6 formées sur le sol 4.

Le comptage des impulsions V1' indique le nombre de franges franchies, et constitue donc une évaluation de la distance de l'obstacle 8 par rapport au système 9.

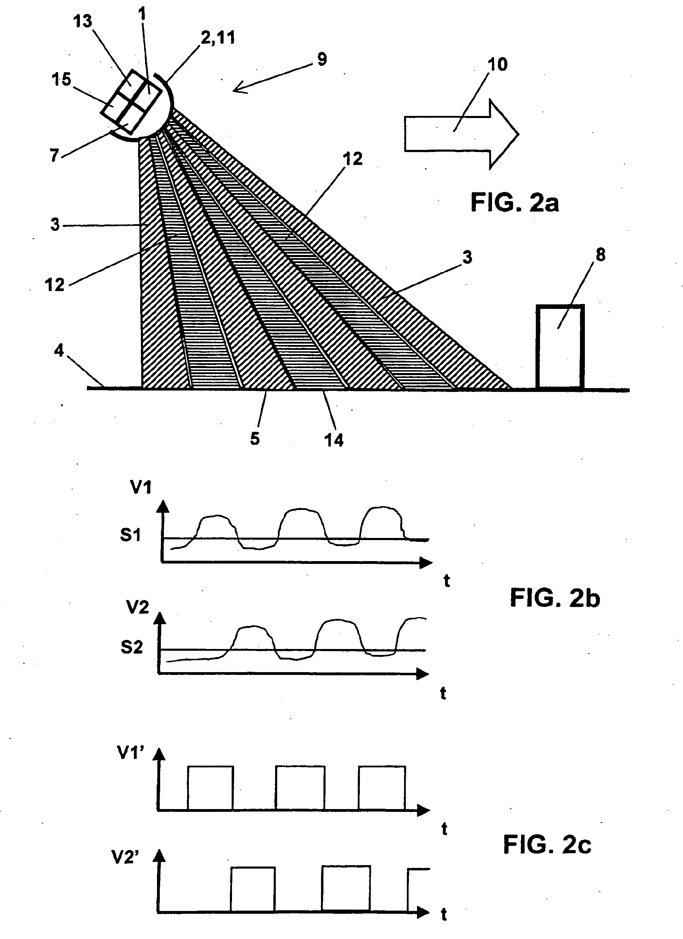

Dans le but d'améliorer l'évaluation de la distance séparant l'obstacle 8 du système 9, les Figures 2a, 2b et 2c montrent la mise en oeuvre d'une longueur d'onde supplémentaire.

Pour ce faire, un autre ensemble de lentilles de Fresnel 11 divise en plusieurs autres pinceaux lumineux 12 le rayonnement émis par une autre source lumineuse 13 ayant une longueur d'onde différente de la précédente.

La trace de ces autres pinceaux lumineux 12 constitue sur le sol 4 des autres zones brillantes 14 au niveau des zones sombres 6 du premier réseau de franges 5,6.

Le rayonnement réfléchi correspondant à cette autre longueur d'onde est détecté par un autre récepteur 15 situé dans le plan objet des autres lentilles de Fresnel 11.

L'obstacle 8 produit les variations d'un autre signal électrique V2, représentées sur la Figure 2b, en entrant dans cet autre réseau de franges 14 de la même manière qu'il produit les variations du signal V1 en entrant dans le premier réseau de franges 5,6.

La comparaison de cet autre signal V2 à un autre seuil prédéterminé S2 (correspondant à une mesure du flux réfléchi pour cette longueur d'onde en l'absence d'obstacle) forme des autres impulsions V2' représentatives de la pénétration de l'obstacle 8 dans le deuxième champ de franges 14 imbriqué dans le premier 5,6.

Le comptage de ces secondes impulsions V2' constitue donc une interpolation de la première mesure de distance de l'obstacle 8 par rapport au système 9.

Deux longueurs d'onde sont également avantageusement utilisées pour mesurer des distances selon deux axes de coordonnées plutôt que pour améliorer la résolution spatiale sur un seul axe.

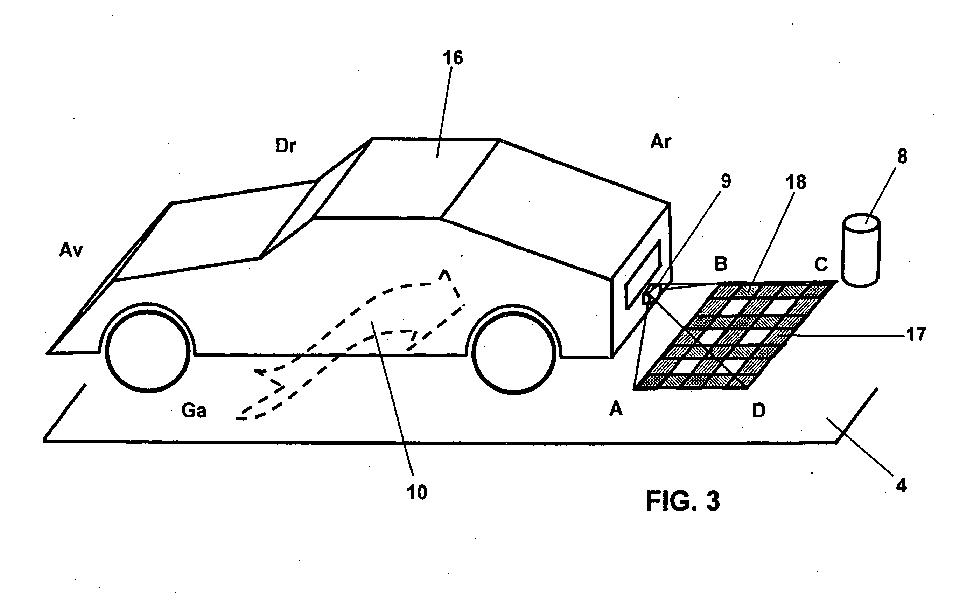

La Figure 3 montre la mise en oeuvre du procédé selon l'invention faisant appel à deux longueurs d'onde différentes dans un dispositif 9 d'aide au parking monté à l'arrière Ar d'une automobile 16.

Une manoeuvre de prise d'un stationnement en marche arrière 10 est souvent à l'origine de petits dégâts au bas de caisse d'un véhicule 16 à cause d'un obstacle 8 qui n'est pas vu par le conducteur dans le ou les rétroviseurs.

Le dispositif selon l'invention permet de localiser cet obstacle 8 à l'arrière du véhicule 16 afin de guider le conducteur.

Comme le montre bien la Figure 3, le dispositif 9 projette sur le sol 4 à l'arrière Ar du véhicule 16 un premier réseau de franges présentant des premières bandes lumineuses rectilignes 17 orientés perpendiculairement à l'axe longitudinal Av-Ar du véhicule 16, et des secondes bandes lumineuses rectilignes 18 orientées parallèlement.

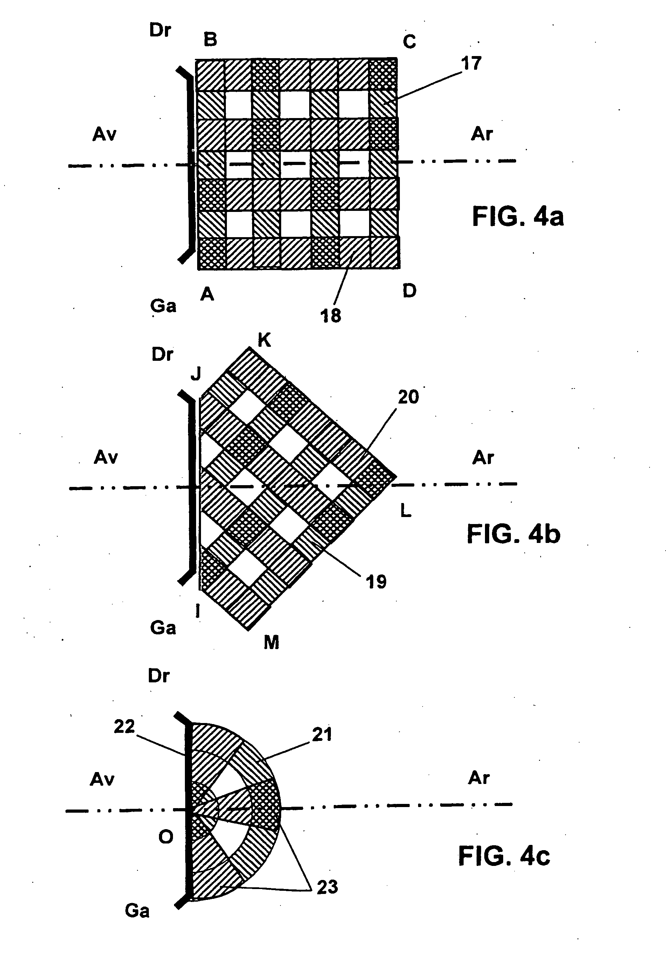

Un périmètre ABCD, par exemple de forme carrée comme le montre la Figure 4a, est ainsi délimité à l'intérieur duquel l'obstacle 8 sera détecté.

Une lumière de longueur d'onde différente est utilisée pour chacun des deux réseaux de franges.

Il en résulte que le comptage au cours de la manoeuvre 10 des impulsions électriques V1', V2' produites par le système 9, sur chacune des deux voies de mesure du rayonnement réfléchi par le sol 4 et l'obstacle 8, est une détermination selon deux axes orthogonaux Av-Ar,Ga-Dr de la distance d'intrusion de l'obstacle 8 dans le périmètre de détection ABCD.

Comme le montrent les Figures 4b et 4c, un périmètre de détection ABCD de forme carrée n'est pas le seul possible.

La Figure 4b montre une configuration où les réseaux de franges présentent des bandes lumineuses rectilignes 19,20 orientées à 45° par rapport à l'axe longitudinal Av-Ar du véhicule 16.

Cette configuration présente l'avantage de lever l'indétermination de la position transversale de l'obstacle 8 qui résulterait d'un mouvement du véhicule strictement selon une direction longitudinale Av-Ar. En effet dans cette configuration, au cours d'une manoeuvre de ce type, l'obstacle 8 coupe les bandes des deux réseaux en pénétrant dans le périmètre de détection IJKLM, sans rester dans une seule des bandes longitudinales 18 de la configuration montrée sur la Figure 4a.

La Figure 4c montre une configuration où les franges du premier réseau présentent des segments circulaires lumineux 21 centrés au milieu O de la partie arrière 22 du véhicule, par exemple le pare-choc. De la sorte, la distance par rapport à l'arrière 22 du véhicule 16 est toujours déterminée par le comptage des impulsions, quelle que soit la direction du mouvement.

Le second réseau de franges présentant des secteurs lumineux 23 donne une estimation de l'intrusion transversale de l'obstacle 8 dans le périmètre de détection.

Le procédé et le dispositif 9 selon l'invention décrits ci-dessus permettent la détermination de la position d'un obstacle 8 voisinage d'un véhicule 16 en mouvement sans mesurer le temps de vol de très courtes impulsions lumineuses, selon la technique habituellement utilisée dans l'art antérieur, qui nécessiterait des moyens électroniques complexes et des composants très performants pour des distances inférieures à un mètre, compte tenu de la vitesse de la lumière (temps de vol de quelques nanosecondes seulement).

L'émission en infrarouge du dispositif 9 selon l'invention est de préférence continue, et les seuls moyens électroniques de traitement du signal reçu à mettre en oeuvre se réduisent alors à un comparateur.

Quand le dispositif 9 travaille en lumière visible, l'émission est modulée en amplitude afin d'éliminer facilement la composante continue du signal résultant de la lumière ambiante. La fréquence de modulation n'est pas critique, et de préférence de l'ordre de quelques dizaines de kilohertz. Il en est de même de la forme de la modulation, sinusoïdale ou en impulsions. Le circuit intégrateur, ou de filtrage, est avantageusement constitué d'un simple circuit RC de constante de temps adaptée.

Comme il va de soi, l'invention ne se limite pas aux seuls modes d'exécution préférentiels décrits ci-dessus. Elle embrasse au contraire toutes les variantes possibles de réalisation.

Notamment, les configurations géométriques des réseaux de franges lumineuses données ci-dessus ne sont pas limitatives. De multiples configurations existent, et sont plus ou moins adaptées à la situation du dispositif 9 à l'arrière Ar, à l'avant Av, ou sur les côtés Dr,Ga du véhicule 16.

Dans d'autres modes de réalisation, un multiplexage temporel est utilisé pour discriminer les signaux lumineux correspondant à chaque réseau de franges alternativement ou simultanément au multiplexage fréquentiel décrit en détail ci-dessus.

Ces autres modes de réalisation ne sortiraient pas du cadre de la présente invention dans la mesure où les caractéristiques du procédé mis en oeuvre, et du dispositif correspondant, résultent des revendications ci-après.

## Revendications

1. Procédé de détection d'un obstacle (8) au voisinage d'un dispositif de détection (9) en mouvement, du type de ceux consistant à émettre à partir dudit dispositif de détection (9) en direction du sol (4) au moins un premier faisceau lumineux incident d'une première longueur d'onde et à détecter au moins un premier faisceau lumineux réfléchi par ledit sol (4), et ledit obstacle (8), comprenant les étapes suivantes :
- division dudit premier faisceau lumineux incident de façon à former sur ledit sol (4) des premières franges lumineuses correspondant à des premières zones (5,6) dont l'éclairement est alternativement supérieur à une première valeur haute prédéterminée et inférieur à une première valeur basse prédéterminée ;
- production d'un premier signal électrique (V1) représentatif de l'évolution dans le temps du flux lumineux transporté par ledit premier faisceau lumineux réfléchi; **caractérisé en ce qu'**il comprend en outre les étapes suivantes :
- formation de premières impulsions électriques (V1') par comparaison dudit premier signal (V1) avec un premier seuil prédéterminé (S1);
- comptage desdites premières impulsions (V1');
- détermination d'une première coordonnée dudit obstacle (8) par rapport audit dispositif de détection (9) en fonction du premier résultat du comptage, et **en ce que** le dispositif de détection (9) est situé sur un véhicule (16).

2. Procédé de détection d'un obstacle (8) au voisinage d'un véhicule (16) en mouvement selon la revendication 1 précédente, **caractérisé en ce qu'**il comprend de plus les étapes suivantes :
- émission à partir du véhicule (16) en direction dudit sol (4) d'un second faisceau lumineux incident d'une seconde longueur d'onde différente de ladite première longueur d'onde;
- division dudit second faisceau lumineux incident de façon à former sur ledit sol (4) des secondes franges lumineuses correspondant à des secondes zones (14) dont l'éclairement est alternativement supérieur à une seconde valeur haute prédéterminée et inférieur à une seconde valeur basse prédéterminée ;
- détection d'un second faisceau lumineux réfléchi par ledit sol (4) et ledit obstacle (8);
- production d'un second signal électrique (V2) représentatif de l'évolution dans le temps du flux lumineux transporté par ledit second faisceau lumineux réfléchi;
- formation de secondes impulsions électriques (V2') par comparaison dudit second signal (V2) avec un second seuil prédéterminé (S2);
- comptage desdites secondes impulsions (V2');
- détermination d'une seconde cordonnée dudit obstacle (8) par rapport audit véhicule (16) en fonction du second résultat du comptage ;
- détermination de la position dudit obstacle (8) par rapport audit véhicule (16) en fonction desdites première et seconde cordonnées.

3. Procédé de détection d'un obstacle (8) au voisinage d'un véhicule (16) en mouvement selon la revendication 2 précédente, **caractérisé en ce que** lesdites secondes zones (14) coupent lesdites premières zones (5,6) perpendiculairement.

4. Procédé de détection d'un obstacle (8) au voisinage d'un véhicule (16) en mouvement selon la revendication 2 précédente, **caractérisé en ce que** lesdites premières (5,6) et secondes zones (14) sont similaires, et imbriquées les unes dans les autres de telle sorte que les maxima d'éclairement des unes correspondent aux minima d'éclairement des autres.

5. Procédé de détection d'un obstacle (8) au voisinage d'un véhicule (16) en mouvement selon l'une quelconque des revendications 2 à 4 précédentes, **caractérisé en ce que** :
- lesdites première et/ ou seconde longueurs d'onde appartiennent au spectre visible ;
- lesdits premier et/ ou second faisceaux lumineux incidents sont modulés en amplitude, de préférence en impulsion ;
- lesdits premier et/ ou second signaux électriques (V1,V2) résultent respectivement de l'intégration avec une constante de temps prédéterminée des grandeurs électriques proportionnelles aux flux lumineux instantanés transportés par lesdits premier et second faisceau lumineux réfléchis.

6. Procédé de détection d'un obstacle (8) au voisinage d'un véhicule (16) en mouvement selon l'une quelconque des revendications 2 à 4 précédentes, **caractérisé en ce que** lesdites première et/ ou seconde longueurs d'onde appartiennent au spectre infrarouge.

7. Procédé de détection d'un obstacle (8) au voisinage d'un véhicule (16) en mouvement selon l'une quelconque des revendications 2 à 6 précédentes, **caractérisé en ce que** lesdites premières et/ ou secondes zones (5,6,14) sont rectilignes ou circulaires.

8. Dispositif (9) de détection d'un obstacle (8) au voisinage d'un véhicule (16) en mouvement adapté à la mise en oeuvre du procédé selon l'une quelconque des revendications 1 à 7 précédentes, du type ceux comprenant au moins un premier émetteur optique (1) d'une première longueur d'onde produisant un premier ensemble de pinceaux lumineux (3) au moyen d'au moins un premier système optique (2) comportant une première pluralité de lentilles de Fresnel, et comprenant de plus au moins un premier détecteur optique (7) de détection de la lumière de ladite première longueur d'onde réfléchie par ledit sol (4) et ledit obstacle (8), et captée par ledit premier système optique (2), **caractérisé en ce que** la trace (5) sur ledit sol (4) dudit premier ensemble de pinceaux lumineux (3) est un premier réseau de franges.

9. Dispositif (9) de détection d'un obstacle (8) au voisinage d'un véhicule (16) en mouvement selon la revendication 8 précédente, **caractérisé en ce que** ledit premier réseau de franges présente des premières bandes lumineuses rectilignes (17) orientées perpendiculairement à l'axe longitudinal (Av-Ar) dudit véhicule (16).

10. Dispositif (9) de détection d'un obstacle (8) au voisinage d'un véhicule (16) en mouvement selon la revendication 8 précédente, caractérisé en ce ledit premier réseau de franges présente des segments circulaires lumineux (21) centrés (O) à l'aplomb de l'arrière (22) dudit véhicule (16).

11. Dispositif (9) de détection d'un obstacle (8) au voisinage d'un véhicule (16) en mouvement selon la revendications 8 précédente, **caractérisé en ce qu'**il comprend de plus, d'une part, un second émetteur optique (13) d'une seconde longueur d'onde différente de ladite première longueur d'onde, produisant un second ensemble de pinceaux lumineux (12) au moyen d'un second système optique (11) comportant une seconde pluralité de lentilles de Fresnel, la trace sur ledit sol (4) dudit second ensemble de pinceaux lumineux (12) étant un second réseau de franges, et, d'autre part, un second détecteur optique (15) de détection de la lumière de ladite seconde longueur d'onde réfléchie par ledit sol (4) et ledit obstacle (8), et captée par ledit second système optique (11).

12. Dispositif (9) de détection d'un obstacle (8) au voisinage d'un véhicule (16) en mouvement selon la revendication 11 précédente, **caractérisé en ce que** lesdits premier et second réseaux de franges présentent respectivement des premières et secondes bandes lumineuses rectilignes (5,14) orientées perpendiculairement à l'axe longitudinal (Av-Ar) dudit véhicule (16), lesdits premier et second réseaux étant imbriqués.

13. Dispositif (9) de détection d'un obstacle (8) au voisinage d'un véhicule (16) en mouvement selon la revendication 11 précédente, **caractérisé en ce que** ledit premier réseau de franges présentent des premières bandes lumineuses rectilignes (17) orientées perpendiculairement à l'axe longitudinal dudit véhicule (16), et **en ce que** ledit second réseau de franges présente des secondes bandes lumineuses rectilignes (18) orientées parallèlement à l'axe dudit véhicule.

14. Dispositif (9) de détection d'un obstacle (8) au voisinage d'un véhicule (16) en mouvement selon la revendication 11 précédente, **caractérisé en ce que** lesdits premier et second réseaux de franges présentent des premières et secondes bandes lumineuses rectilignes (19,20) faisant un angle de 45° par rapport à l'axe longitudinal (Av-Ar) dudit véhicule (16), lesdites premières et secondes bandes (19,20) étant perpendiculaires entre elles.

15. Dispositif (9) de détection d'un obstacle (8) au voisinage d'un véhicule (16) en mouvement selon la revendication 11 précédente, **caractérisé en ce que** ledit premier réseau de franges présente des segments circulaires lumineux (21) centrés en un point (O) à l'aplomb de l'arrière (22) dudit véhicule (16), et **en ce que** ledit second réseau de franges présente des secteurs lumineux (23) s'étendant radialement à partir dudit point (O).

## Patentansprüche

1. Verfahren zur Detektion eines Hindernisses (8) in der Nähe einer sich bewegende Detektionsvorrichtung (9), nach Art der Verfahren, die darin bestehen, wenigstens ein erstes auftreffendes Lichtbündel mit einer ersten Wellenlänge von der Detektionsvorrichtung (9) aus in Richtung des Bodens (4) zu emittieren und wenigstens ein erstes von dem Boden (4) und dem Hindernis (8) reflektiertes Lichtbündel zu detektieren, mit den folgenden Schritten:
- Teilen des ersten auftreffenden Lichtbündels, so dass auf dem Boden (4) erste Lichtlinien gebildet werden, die ersten Bereichen (5, 6) entsprechen, deren Beleuchtung abwechselnd über einem ersten vorbestimmten hohen Wert und unter einem ersten vorbestimmten niedrigen Wert liegt;
- Erzeugen eines ersten elektrischen Signals (V1), das für die zeitliche Veränderung des Lichtstroms, der durch das erste reflektierte Lichtbündel übertragen wird, repräsentativ ist;
**dadurch gekennzeichnet, dass** es ferner folgende Schritte umfasst:
- Bilden erster elektrischer Impulse (V1') durch Vergleichen des ersten Signals (V1) mit einem vorbestimmten ersten Schwellenwert (S1);
- Berechnen der ersten Impulse (V1');
- Bestimmen einer ersten Koordinate des Hindernisses (8) in Bezug auf die Detektionsvorrichtung (9) in Abhängigkeit des ersten Rechenergebnisses,
und dass sich die Detektionsvorrichtung (9) an einem Fahrzeug (16) befindet.

2. Verfahren zur Detektion eines Hindernisses (8) in der Nähe eines sich bewegenden Fahrzeugs (16) nach dem vorhergehenden Anspruch 1,
**dadurch gekennzeichnet, dass** es zudem die folgenden Schritte umfasst:
- Emittieren eines zweiten auftreffenden Lichtbündels mit einer sich von der ersten Wellenlänge unterscheidenden zweiten Wellenlänge vom Fahrzeug (16) aus in Richtung des Bodens (4);
- Teilen des zweiten auftreffenden Lichtbündels, so dass auf dem Boden (4) zweite Lichtlinien gebildet werden, die zweiten Bereichen (14) entsprechen, deren Beleuchtung abwechselnd über einem zweiten vorbestimmten hohen Wert und unter einem zweiten vorbestimmten niedrigen Wert liegt;
- Detektieren eines von dem Boden (4) und dem Hindernis (8) reflektieren zweiten Lichtbündels;
- Erzeugen eines zweiten elektrischen Signals (V2), das für die zeitliche Veränderung des Lichtstroms, der durch das zweite reflektierte Lichtbündel übertragen wird, repräsentativ ist;
- Bilden zweiter elektrischer Impulse (V2') durch Vergleichen des zweiten Signals (V2) mit einem vorbestimmten zweiten Schwellenwert (S2);
- Berechnen der zweiten Impulse (V2');
- Bestimmen einer zweiten Koordinate des Hindernisses (8) in Bezug auf das Fahrzeug (16) in Abhängigkeit des zweiten Rechenergebnisses;
- Bestimmen der Position des Hindernisses (8) in Bezug auf das Fahrzeug (16) in Abhängigkeit der ersten und der zweiten Koordinaten.

3. Verfahren zur Detektion eines Hindernisses (8) in der Nähe eines sich bewegenden Fahrzeugs (16) nach dem vorhergehenden Anspruch 2,
**dadurch gekennzeichnet, dass** die zweiten Bereiche (14) die ersten Bereiche (5, 6) senkrecht schneiden.

4. Verfahren zur Detektion eines Hindernisses (8) in der Nähe eines sich bewegenden Fahrzeugs (16) nach dem vorhergehenden Anspruch 2,
**dadurch gekennzeichnet, dass** die ersten (5, 6) und zweiten (14) Bereiche gleichartig sind und sich gegenseitig solchermaßen überlappen, dass die Beleuchtungsmaxima der einen den Beleuchtungsminima der anderen entsprechen.

5. Verfahren zur Detektion eines Hindernisses (8) in der Nähe eines sich bewegenden Fahrzeugs (16) nach einem der vorhergehenden Ansprüche 2 bis 4, **dadurch gekennzeichnet, dass**:
- die erste und/oder die zweite Wellenlänge dem sichtbaren Spektrum angehören;
- die ersten und/oder die zweiten auftreffenden Lichtbündel amplitudenmoduliert, vorzugsweise impulsmoduliert sind;
- die ersten und/oder die zweiten elektrischen Signale (V1, V2) jeweils aus der Integration mit einer vorbestimmten Zeitkonstanten der elektrischen Größen proportional zu den augenblicklichen Lichtströmen resultieren, die durch die ersten und zweiten reflektierten Lichtbündel übertragen werden.

6. Verfahren zur Detektion eines Hindernisses (8) in der Nähe eines sich bewegenden Fahrzeugs (16) nach einem der vorhergehenden Ansprüche 2 bis 4, **dadurch gekennzeichnet, dass** die erste und/oder die zweite Wellenlänge dem Infrarotspektrum angehören.

7. Verfahren zur Detektion eines Hindernisses (8) in der Nähe eines sich bewegenden Fahrzeugs (16) nach einem der vorhergehenden Ansprüche 2 bis 6, **dadurch gekennzeichnet, dass** die ersten und/oder die zweiten Bereiche (5, 6, 14) gerade oder kreisförmig sind.

8. Vorrichtung (9) zur Detektion eines Hindernisses (8) in der Nähe eines sich bewegenden Fahrzeugs (16), die das Verfahren nach einem der vorhergehenden Ansprüche 1 bis 7 durchzuführen vermag, nach Art derjenigen, die wenigstens einen ersten optischen Emitter (1) mit einer ersten Wellenlänge umfassen, der einen ersten Satz Strahlenbüschel (3) mittels wenigstens eines ersten optischen Systems (2) erzeugt, das eine erste Vielzahl von Fresnel-Linsen aufweist, und die ferner wenigstens einen ersten optischen Detektor (7) zur Detektion des von dem Boden (4) und dem Hindernis (8) reflektierten und dem ersten optischen System (2) erfassten Lichts mit der ersten Wellenlänge umfassen,
**dadurch gekennzeichnet, dass** die Spur (5) der ersten Strahlenbüschel (3) am Boden (4) ein erstes Liniennetz ist.

9. Vorrichtung (9) zur Detektion eines Hindernisses (8) in der Nähe eines sich bewegenden Fahrzeugs (16) nach dem vorhergehenden Anspruch 8,
**dadurch gekennzeichnet, dass** das erste Liniennetz erste gerade Lichtstreifen (17) aufweist, die senkrecht zur Längsachse (Av-Ar) des Fahrzeugs (16) ausgerichtet sind.

10. Vorrichtung (9) zur Detektion eines Hindernisses (8) in der Nähe eines sich bewegenden Fahrzeugs (16) nach dem vorhergehenden Anspruch 8,
**dadurch gekennzeichnet, dass** das erste Liniennetz kreisförmige Lichtsegmente (21) aufweist, die senkrecht zum Heck (22) des Fahrzeugs (16) ausgerichtet (0) sind.

11. Vorrichtung (9) zur Detektion eines Hindernisses (8) in der Nähe eines sich bewegenden Fahrzeugs (16) nach dem vorhergehenden Anspruch 8,
**dadurch gekennzeichnet, dass** sie ferner einerseits einen zweiten optischen Emitter (13) mit einer sich von der ersten Wellenlänge unterscheidenden zweiten Wellenlänge umfasst, der einen zweiten Satz Strahlenbüschel (12) mittels eines zweiten optischen Systems (11) erzeugt, das eine zweite Vielzahl von Fresnel-Linsen aufweist, wobei die Spur des zweiten Satzes Strahlenbüschel (12) am Boden (4) ein zweites Liniennetz ist, und sie andererseits einen optischen Detektor (15) zur Detektion des von dem Boden (4) und dem Hindernis (8) reflektierten und von dem zweiten optischen System (11) erfassten Lichts mit der zweiten Wellenlänge umfasst.

12. Vorrichtung (9) zur Detektion eines Hindernisses (8) in der Nähe eines sich bewegenden Fahrzeugs (16) nach dem vorhergehenden Anspruch 11,
**dadurch gekennzeichnet, dass** das erste und das zweite Liniennetz jeweils erste und zweite gerade Lichtstreifen (5, 14) aufweisen, die senkrecht zur Längsachse (Av-Ar) des Fahrzeugs (16) ausgerichtet sind, wobei sich das erste und das zweite Netz gegenseitig überlappen.

13. Vorrichtung (9) zur Detektion eines Hindernisses (8) in der Nähe eines sich bewegenden Fahrzeugs (16) nach dem vorhergehenden Anspruch 11,
**dadurch gekennzeichnet, dass** das erste Liniennetz erste gerade Lichtstreifen (17) aufweist, die senkrecht zur Längsachse des Fahrzeugs (16) ausgerichtet sind, und dass das zweite Liniennetz zweite gerade Lichtstreifen (18) aufweist, die parallel zur Achse des Fahrzeugs ausgerichtet sind.

14. Vorrichtung (9) zur Detektion eines Hindernisses (8) in der Nähe eines sich bewegenden Fahrzeugs (16) nach dem vorhergehenden Anspruch 11,
**dadurch gekennzeichnet, dass** das erste und das zweite Liniennetz erste und zweite gerade Lichtstreifen (19, 20) aufweisen, die einen Winkel von 45° zur Längsachse (Av-Ar) des Fahrzeugs (16) bilden, wobei die ersten und die zweiten Lichtstreifen (19, 20) zueinander senkrecht sind.

15. Vorrichtung (9) zur Detektion eines Hindernisses (8) in der Nähe eines sich bewegenden Fahrzeugs (16) nach dem vorhergehenden Anspruch 11,
**dadurch gekennzeichnet, dass** das erste Liniennetz kreisförmige Lichtsegmente (21) aufweist, die in einem Punkt (0) senkrecht zum Heck (22) des Fahrzeugs (16) ausgerichtet sind, und dass das zweite Liniennetz Lichtsegmente (23) aufweist, die von diesem Punkt (0) aus radial verlaufen.

## Claims

1. Method for detection of an obstacle (8) in the vicinity of a device (9) for detection of movement, of the type consisting of emitting from the said detection device (9), in the direction of the ground (4), at least a first incident light beam with a first wave length, and detecting at least one first light beam reflected by the said ground (4) and the said obstacle (8), comprising the following steps:
- division of the said first incident light beam, such as to form on the said ground (4) first light fringes corresponding to first areas (5, 6), the lighting of which is alternately higher than a first predetermined high value, and lower than a first predetermined low value;
- production of a first electric signal (V1) which is representative of the development over a period of time of the flow of light transported by the said first reflected light beam,
**characterised in that** it additionally comprises the following steps:
- formation of first electric pulses (V1') by comparison of the said first signal (V1) with a first predetermined threshold (S1);
- counting of the said first pulses (V1');
- determination of a first coordinate of the said obstacle (8) relative to the said detection device (9), according to the first counting result,
and **in that** the detection device (9) is located on a vehicle (16).

2. Method for detection of an obstacle (8) in the vicinity of a moving vehicle (16) according to the preceding claim 1, **characterised in that** it additionally comprises the following steps:
- emission from the vehicle (16), in the direction of the said ground (4), of a second incident light beam with a second wave length different from that of the said first wave length;
- division of the said second incident light beam, such as to form on the said ground (4) second light fringes corresponding to second areas (14), the lighting of which is alternately higher than a second predetermined high value, and lower than a second predetermined low value;
- detection of a second light beam reflected by the said ground (4) and the said obstacle (8);
- production of a second electric signal (V2) which is representative of the development over a period of time of the flow of light transported by the said second reflected light beam;
- formation of second electric pulses (V2') by comparison of the said second signal (V2) with a second predetermined threshold (S2);
- counting of the said second pulses (V2');
- determination of a second coordinate of the said obstacle (8) relative to the said vehicle (16), according to the second counting result;
- determination of the position of the said obstacle (8) relative to the said vehicle (16) according to the said first and second coordinates.

3. Method for detection of an obstacle (8) in the vicinity of a moving vehicle (16) according to the preceding claim 2, **characterised in that** the said second areas (14) intersect the said first areas (5, 6) perpendicularly.

4. Method for detection of an obstacle (8) in the vicinity of a moving vehicle (16) according to the preceding claim 2, **characterised in that** the said first (5, 6) and second (14) areas are similar, and are imbricated in one another such that the maximum lighting of the first corresponds to the minimum lighting of the others.

5. Method for detection of an obstacle (8) in the vicinity of a moving vehicle (16) according to any one of the preceding claims 2 to 4, **characterised in that**:
- the said first and/or second wave lengths belong to the visible spectrum;
- the amplitude of the said first and/or second incident light beams is modulated, preferably in pulse form;
- the said first and/or second electric signals (V1, V2) are derived respectively from the integration with a predetermined time constant of the electric values proportional to the instantaneous flows of light transported by the said first and second reflected light beams.

6. Method for detection of an obstacle (8) in the vicinity of a moving vehicle (16) according to any one of the preceding claims 2 to 4, **characterised in that** the said first and/or second wave lengths belong to the infrared spectrum.

7. Method for detection of an obstacle (8) in the vicinity of a moving vehicle (16) according to any one of the preceding claims 2 to 6, **characterised in that** the said first and/or second areas (5, 6, 14) are straight or circular.

8. Device (9) for detection of an obstacle (8) in the vicinity of a moving vehicle (16) designed for implementation of the method according to any one of the preceding claims 1 to 7, of the type comprising at least a first optical emitter (1) with a first wave length which produces a first series of light beams (3) by means of at least a first optical system (2) comprising a first plurality of Fresnel lenses, and additionally comprising at least a first optical detector (7) for detection of the light with the said first wave length reflected by the said ground (4) and the said obstacle (8), and detected by the said first optical system (2), **characterised in that** the trace (5) on the said ground (4) of the said first set of light beams (3) is a first network of fringes.

9. Device (9) for detection of an obstacle (8) in the vicinity of a moving vehicle (16) according to the preceding claim 8, **characterised in that** the said first network of fringes has first straight light strips (17) which are oriented perpendicularly to the longitudinal axis (Av-Ar) of the said vehicle (16).

10. Device (9) for detection of an obstacle (8) in the vicinity of a moving vehicle (16) according to the preceding claim 8, **characterised in that** the said first network of fringes has circular light segments (21) which are centred (O) plumb with the rear (22) of the said vehicle (16).

11. Device (9) for detection of an obstacle (8) in the vicinity of a moving vehicle (16) according to the preceding claim 8, **characterised in that** it additionally comprises firstly a second optical emitter (13) of a second wave length which is different from the said first wave length, producing a second set of light beams (12) by means of a second optical system (11) comprising a second plurality of Fresnel lenses, the trace on the said ground (4) of the said second set of light beams (12) being a second network of fringes, and, secondly, a second optical detector (15) for detection of the light of the said second wave length reflected by the said ground (4) and the said obstacle (8), and detected by the said second optical system (11).

12. Device (9) for detection of an obstacle (8) in the vicinity of a moving vehicle (16) according to the preceding claim 11, **characterised in that** the said first and second networks of fringes have respectively first and second straight light strips (5, 14) which are oriented perpendicularly to the longitudinal axis (Av-Ar) of the said vehicle (16), the said first and second networks being imbricated.

13. Device (9) for detection of an obstacle (8) in the vicinity of a moving vehicle (16) according to the preceding claim 11, **characterised in that** the said first network of fringes has first straight light strips (17) which are oriented perpendicularly to the longitudinal axis of the said vehicle (16), and **in that** the said second network of fringes has second straight light strips (18) which are oriented parallel to the axis of the said vehicle.

14. Device (9) for detection of an obstacle (8) in the vicinity of a moving vehicle (16) according to the preceding claim 11, **characterised in that** the said first and second networks of fringes have first and second straight light strips (19, 20) which form an angle of 45° relative to the longitudinal axis (Av-Ar) of the said vehicle (16), the said first and second strips (19, 20) being perpendicular to one another.

15. Device (9) for detection of an obstacle (8) in the vicinity of a moving vehicle (16) according to the preceding claim 11, **characterised in that** the said first network of fringes has circular light segments (21) which are centred on a point (O) which is plumb with the rear (22) of the said vehicle (16), and **in that** the said second network of fringes has light sectors (23) which extend radially from the said point (O).
